# EUROPEAN PATENT SPECIFICATION

(11) **EP 0 562 610 B1**
(45) Date of publication and mention of the grant of the patent: **30.07.1997**
(21) Application number: 93104973.8
(22) Date of filing: 25.03.1993
(51) Int. Cl.: H02K 1/00, H02K 1/16, H02K 1/26, H02K 15/02, H02K 21/00, H02K 17/02

(54) **Pair of cores with air gap of the truncated cone type, obtained from ferromagnetic tape for an electric rotary machine, in particular for an electric induction motor, and relative production method**
Kernpaar aus ferromagnetischem Band mit Kegelstumpfartigem Luftspalt für eine elektrische Drehmaschine, insbesondere für einen Asynchronmotor und entsprechendes Herstellungsverfahren
Couple de noyaux avec entrefer tronçonique, obtenu à partir d'un ruban ferromagnétique, pour une machine électrique rotative, notamment pour un moteur asynchrone et procédé de fabrication associé

(30) Priority: 27.03.1992 IT TO920273
(43) Date of publication of application: 29.09.1993
(73) Proprietor: Bertagni, Quirino, I-10045 Piossasco (TO) (IT)
(72) Inventor: Bertagni, Quirino, I-10045 Piossasco (TO) (IT)
(74) Representative: Dini, Roberto, Dr. Ing.

(56) References cited:
- EP-A- 0 046 310
- EP-A- 0 123 347
- EP-A- 0 145 987
- DE-A- 3 318 103
- DE-A- 3 538 506
- US-A- 3 581 132
- US-A- 4 812 696

## Description

The present invention refers to a pair of cores, apt for use in an electric rotary machine, comprising a stator element and a rotor element that rotates with respect to a rotation axis, said elements being separated by an air gap.

As known conventional construction methods of the core of a rotary electric machine by means of spiral or helical winding of the ferromagnetic tape, cause the machine to assume three different kinds of geometry and precisely:
a) cylindrical, i.e. the rotor has a cylindrical form and the stator has a complementary form so as to consent the rotation of the rotor;
b) disk, i.e. the rotor and the stator are frontally arranged;
c) conic, i.e the rotor and the stator are of a truncated cone form being complementary between them.

The cylindrical geometry is provided by the helical winding, i.e. of a constant diameter, of a ferromagnetic tape, on which slots and teeth have been obtained, for example as described by French Patent Application n. 2.424.657.

The disk geometry is provided by the spiral winding, i.e. of a variable diameter, of the ferromagnetic tape on which slots and teeth have been obtained.

The conic geometry is provided by the spiral and/or helical winding of the ferromagnetic tape on which slots and teeth have been obtained. Such known techniques have some drawbacks.

In fact the helical winding of the ferromagnetic tape for obtaining a cylindrical geometry, causes the deformation of the mechanical and magnetic structure during the preparation of the core.

Such deformation is necessary for making the tape assume a cylindrical form according to an axis perpendicular to the surface of the tape. The disk geometry, with a parity of power if compared to the cylindrical geometry, requires a greater diameter of the core as the power is directly proportional to the square of the average diameter of the air gap and to the length of the core.

Furthermore for housing the heads of the coils it is necessary to increase both the external diameter of the machine to enable the mounting of the protection caps, and the internal diameter to house means for the rotation of the rotor.

Such increase of the external diameter causes, still with a parity of power of a cylindrical geometry, the encumbrance regards the height of the machine to exit from the standard size as required by international regulations for such power, where provided.

The conic geometry has the same drawbacks of the cylindrical geometry, as far as regards the deformation of the mechanical and magnetic structure during the preparation of the core, when it is obtained by way of a helical winding of the tape.

Furthermore with a parity of the average diameter of the air gap the external encumbrance of the machine increases and the available internal space for the rotation means decreases.

It is known from EPA 0 145 987 an electric rotary machine that has a pair of cores of which one (rotor) is realised in a sintered material and the other (stator) is realised by the spiral winding of a ferromagnetic tape, presenting a series of slots and teeth; a part of every tooth is bent at an angle of 90° respect the rotational axis; the air gap between the two cores is of a spherical form, so as to realise a couple of facing surfaces that result in being greater than the smaller section of the cores, with the aim to differentiate the intensity of the flow between the air gap and the cores.

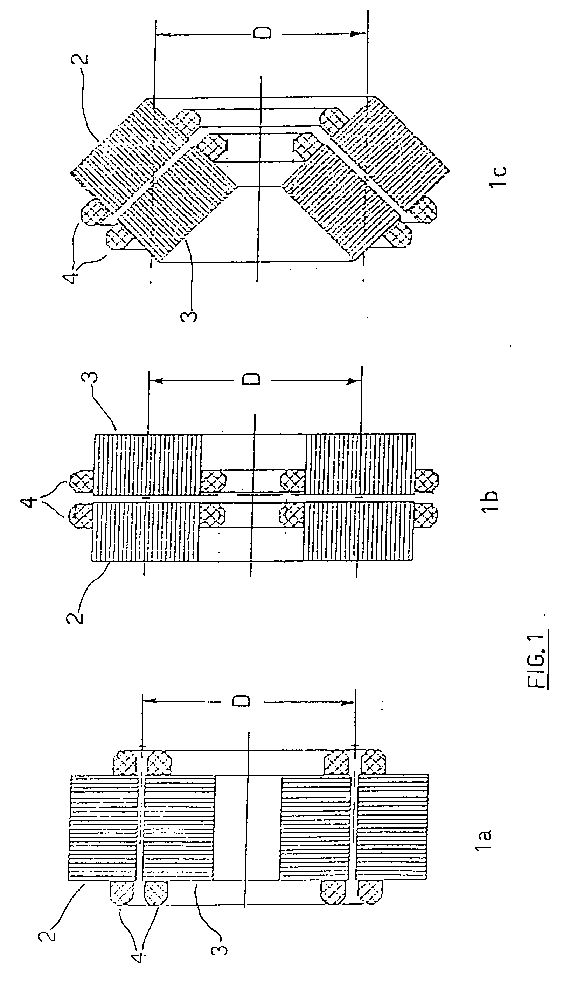

The described wound core (stator) shows a number of steps at the air gap surface (fig. 1) so increasing the average width of the gap; furthermore the solution of spherical surfaces, besides increasing the length of the electrical windings, brings about as a consequence the fact that it is not possible to realise both the cores through the winding of a tape, with clear drawbacks.

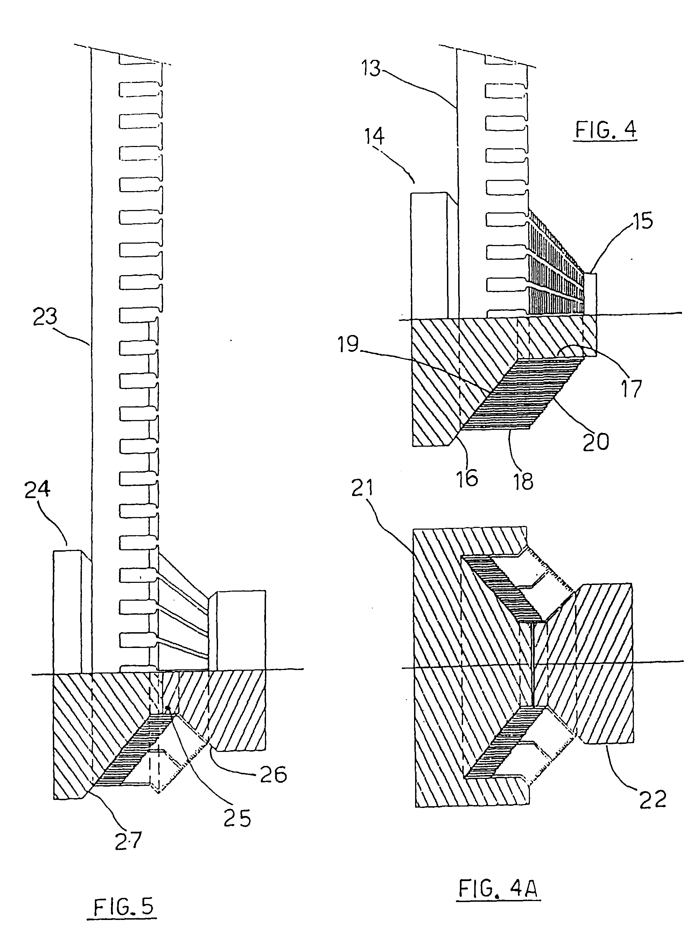

It is known from the US patent 3.581.132 an electric rotary machine also showing a spherical air gap surface, very similar to that of the above said EPA; in an alternative embodiment (fig. 3c; column 2, lines 34-39) a saddle shaped air gap is shown, also having a stepped form of pole surface; this machine has the same drawbacks indicated above.

It is also known from EPA 0 046 310 an electric machine showing, among other embodiments, a cone shaped rotor or stator (fig. 13 and 14); in this machine the teeth do not show bending; as a conseguence the length of the electrical windings is greater; moreover the air gap surfaces show the necessary steps (see page 16, lines 1-3) and the related drawbacks.

The aim of the present invention is that of overcoming the abovementioned drawbacks and in particular to illustrate a couple of cores obtained from a ferromagnetic tape for an electric rotary machine in which the mechanical and magnetic deformations of the tape are substantially eliminated and obtaining a better arrangement of the heads of the coils and an increase in power with parity of encumbrance of the machine.

Such aims are reached according to the present invention by a pair of cores, apt for use in an electric rotary machine, having the features described in the first claim, by the machine having the features described in the independent claim 9 and by the method having the fetures described in the independent claim 10.

Further characteristics and advantages of the present invention will result in being clear from the description and annexed drawings, supplied as a purely explanatory and non-limiting example, wherein:
- figure 1 represents a schematic view of the geometries of the cores of an electric rotary machine according to the known art;
- figure 2 represents a sectioned schematic view of a pair of cores subject of the present invention, one utilised for realising the stator, the other for realising the rotor of an electric rotary machine;
- figure 3 represents a partial and schematic section of the core subject of the present invention;
- the figures 4 and 4A represent in a schematic way a method of realisation of a core subject of the present invention;
- figure 5 represents in a schematic way a second method of realisation of a core subject of the present invention;
- figure 6 represents in a schematic way a electric rotary machine realised with a pair of cores subject of the present invention.

Some of the components of the electric rotary machine realised with the truncated cone core object of the present invention, that will be later described, have not been represented in the figures inasmuch they are relatively simple and known.

With reference to figure 1, where there are represented in a schematic way, the geometries of the cores made from ferromagnetic tape wound in a helical or spiral manner, as according to the known art, 1a indicates a cylindrical geometry, 1b indicates a disk geometry, while with 1c a conic geometry is indicated.

Reference number 2 indicates a stator core of the electric rotary machine, with number 3 a rotor core is indicated. The rotor and stator indication has been utilised purely as an example and for the simplicity of the description being that the function of the core can be reversed from stator to rotor and vice versa. In fact in the figure the windings are represented both on the stator and on the rotor, while in practice they will be arranged only on the stator.

With reference number 4 the heads of the windings are indicated, letter D indicates the average diameter of the air gap, the value of which must be taken in consideration for calculating the power of the rotary electric machine which varies with the square of the average diameter.

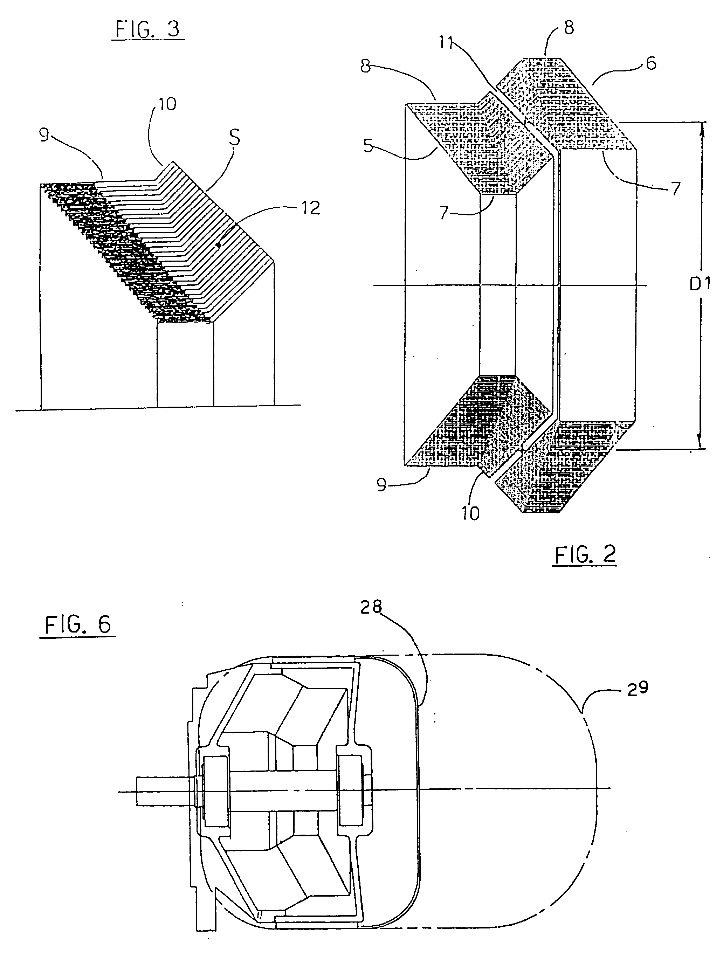

With reference to the figures 2 and 3, that represent a pair of cores according to the present invention, number 5 indicates a truncated cone core referring to a rotor (or stator) of a rotary machine, while reference number 6 indicates a truncated cone core being complementary to said truncated cone core 5.

Each truncated cone core is made up of numerous layers of ferromagnetic tape worked in order to present a series of slots and teeth and spirally wound, where the first layer is indicated with number 7, while the last layer of the core is indicated with number 8.

Each layer is formed by a flat part 9, being parallel to the rotation axis, and by an inclined part 10 with respect to the rotation axis and therefore also with respect to the remaining part of the tape not bent.

The inclined part 10 is realised only on the area of the tooth that is obtained from the working operation for obtaining the slots, while the part of the tape that lies between the end of the slot and the opposite edge to the tooth always remains flat and is never bent, so as to avoid deformations of the mechanical and magnetic structure of the tape.

The starting point of the inclined part is not equal for all the teeth, but is deplaced with each layer as shown in figure 2 starting from the first wound layer 7 till the last layer 8.

The starting point of the bending varies in a different way between the two complementary cores, stator and rotor, that compose the electric rotary machine, as is clearly understood from figure 2; in fact the bent part is great on the first layer (7) of the core 5 and is gradually reduced in the successive layers, while it is small on the first layer (7) of the core 6 and progressively increases in the successive layers; furthermore the direction of the bending is different in core 6 with respect core 5.

In a possible realisation the bending of the inclined part is carried out in a single operation, after having obtained a core made up of numerous layers of ferromagnetic tape spirally wound and a conic form has been given to the core by means of the axial displacement of each layer.

The folding, realised as indicated in figure 2, allows for increasing the average diameter of the air gap maintaining the same external dimensions of the machine, increasing as a result the power of the machine or, vice versa, to maintain as constant the power decreasing the exterior dimensions of the machine with a consequent reduction in materials used and of costs.

Reference number 11 indicates an air gap between said cores 5 and 6 (stator and rotor or vice versa); as can be seen in figure 2 such air gap is delimited by two truncated cone surfaces.

Furthermore, bending the tooth at a certain angle, for example inclining it to 45° with respect the rotation axis (given purely as an example), it is also possible to have the end part of each layer of tape (tape thickness), aligned with the successive in such a way that the resulting surface (shown with S in figure 3) be substantially smooth, without steps, and for the application of which on electric rotary machines of common use no further workings are required.

The reference D1 indicates the average diameter of the air gap between the two cores, that is naturally greater if compared to the solutions known with parity of external dimensions.

With reference to figure 3 that represents a partial and schematic section of the core subject of the present invention, number 12 indicates the opening of a slot of the core for housing the windings; the darker part of the figure represents the zone without slots.

Figure 6 represents in a schematic way the dimensions, indicated with reference number 28, of an electric rotary machine realised with a pair of cores subject of the present invention, while with 29 the dimensions of a traditional rotary electric machine is schematically indicated being of equal power that utilises a pair of cores of a cylindrical geometry.

With figure 4 a production method of a truncated cone core of an electric rotary machine object of the present invention is also described, given purely as an explanatory and non-limiting example.

With number 13 a ferromagnetic tape is indicated on which teeth and slots have been previously obtained in a known way, for example by punching.

During this realisation method of the slots that must house the windings, after the punching of a certain number of slots, such number being defined based on the characteristics that the core must have for a certain type of electric rotary machine, the spacing between slot and slot is varied, in function of the variation in the radius of the winding, such radius increasing due to the thickness of the tape that has realised the previous layer.

With number 14 a dragging and winding means of the tape is indicated. Said means formed by a cylindrical part 15 and a truncated cone part 16.

Such means is supplied in a known way with two movements, one of rotation for the dragging and winding of the tape on the cylindrical part 15, the other of axial translation along the rotation axis.

The second movement allows, with each winding revolution of the tape, the axial displacement of the means 14 in order to create a winding of the core that reproduces the conic side of the truncated cone part 16, in order to obtain upon completion of the winding of the core, a rhomboidal section with two sides 17 and 18 being parallel between them and to the axis of the winding and the other two sides 19 and 20 being parallel between them and inclined with respect to the rotation axis.

The cylindrical part 15 with its diameter determines the size of the internal diameter of the core and with the rotation movement drags and winds the tape in a continuous manner upon itself until the required size of the core has been obtained.

After having obtained a core with a section having a rhomboidal form, with an appropriate tool composed of a matrix 21 and a punch 22 opportunity shaped, represented in figure 4A, a bending of an inclined side is carried out (in figure 4A towards the exterior respect to the rotation axis) of an extremity of the ensemble thus obtained, acting in order to operate only upon the part of the tape where the teeth have been obtained.

In such a way an inclination of the teeth is created with respect to the rotation axis of the winding of the tape and a surface being substantially without steps is obtained with the alignment of the thicknesses of the tape.

For obtaining a complementary core, the bending is carried out in an opposite sense i.e. inwardly if compared to the rotation axis, utilising however a matrix and a punch being appropriately shaped for such type of bending.

The bending always takes place on the part of the tape where the tooth is situated while, the part of the tape between the end of the slot and the opposite end of the tooth, always remains parallel to the winding axis of the tape.

For example the bending of the teeth can be obtained directly on the ferromagnetic tape before winding it for creating the core.

Such a variation is represented in a schematic manner in figure 5 where with number 23 the ferromagnetic tape is indicated, on which slots have been previously obtained, for example by punching, and the bending of the teeth made with an appropriate tool.

The bending position of the teeth must vary with each development of a layer of the core, so as to obtain after the winding, the alignment of the thickness of the bent teeth of each layer, so that the resulting surface is substantially without steps.

With the number 24 the dragging and winding means of the tape is illustrated.

Said means is made up of a cylindrical part 25, that determines the size of the internal diameter of the core, followed by a truncated cone part 26 where the conic part has the same inclination, with respect to the rotation axis, as the bent part of the tooth, and by a truncated cone part 27, where the conic part is of an inclination of such to contain the cone of the core being the opposite part regards the teeth.

Such means is supplied in a known way with two movements, one of rotation for the dragging and winding of the tape, the other of axial translation along the rotation axis.

The second movement allows, with each winding revolution of the tape, the axial displacement of the means 24 of an entity being correlated to the variation of the beginning of the position of the bending of the teeth. Said means 24 is realised in two pieces, fixed between them with known connection means, for example screws, in order that they can be separated for the removal of the completed core from the cylindrical part 25.

One of such variations can be realised obtaining the bending of the tooth simultaneously with the winding of the ferromagnetic tape, for example creating opportune movements on the dragging means of the tape, being conveniently shaped.

From the given description the characteristics of the truncated cone core for electric rotary machines subject of the present invention are also clear, as are clear its advantages.

In particular they are represented in that:
- with the increasing of the average diameter of the air gap a greater power can be achieved with the same external dimensions;
- maintaining on the other hand the same power reduced external dimensions are obtained with a consequent reduction of materials used and of costs;
- with the alignment of the ends of the layers of tape a surface of the core can be obtained in proximity of the air gap being substantially without steps, that for certain applications does not require supplementary working processes for the levelling of the steps resulting from the folding of the core;
- the heads of the windings occupy a space that does not affect the overall dimensions of the core;
- the cooling of the electric rotary machine is improved having obtained a greater dissipation of the thermic energy, thanks to the approaching of the geometric centre of the parts that generate the thermic energy to the external parts of the electric rotary machine.

For example for avoiding the axial forces due to the conic geometry, an electric rotary machine utilising two rotors and two stators on the same rotation axis can be realised, arranging a pair of rotors and stators in a mirrored way with respect to the other pair, in order that the two axial forces compensate each other.

Another example of a variation could be that of inclining the tooth with respect to the rotation axis being realised with more than one bend per tooth.

Or that the inclination of the tooth with respect to the rotation axis, be obtained with the curvature of the tooth with an appropriate radius rather than be realised by bending.

Another variation among those possible could be that of realising one core according to the procedure of the present invention and the other core with one or more permanent magnets, with the aim of obtaining a synchronous machine or of the brushless type.

Variations and or modifications may occur within the scope of the appended claims.

## Claims

1. Pair of cores (5,6), apt for use in an electric rotary machine, comprising a stator element and a rotor element, that rotates with respect a rotation axis, said elements being separated by an air gap (11), at least one of said cores being obtainable from a ferromagnetic tape (13,23), presenting a series of slots and teeth, and wound according to a spiral procedure, and at least a part (10) of every tooth being bent respect the rotational axis, characterised in that the teeth are bent at an angle minor than 90° outwardly with respect the rotation axis and the resulting air gap surface is of a truncated cone shape.

2. Pair of cores (5,6), according to claim 1, characterised in that the beginning of the inclined part (10) of a tooth is progressively deplaced as the spiral of the core gradually increases and the end part of each tooth is aligned with the end part of the successive tooth and a substantially smooth air gap surface is obtained.

3. Pair of cores (5,6), according to claim 1 or 2, characterised in that in one of the cores the beginning of the inclined part (10) is progressively deplaced towards the end of the tooth as the spiral of the core gradually grows, while in the other core the direction of the bending is opposite to that of the first core and the beginning of the inclined part is gradually deplaced towards the inside of the tooth as the spiral of the core gradually increases.

4. Pair of cores (5,6), according to claim 1, characterised in that said bent part (10) creates more than one inclination of the tooth compared to the rotation axis.

5. Pair of cores (5,6), according to claim 1, characterised in that said bent part (10) is realised according to the arc of a curve.

6. Pair of cores (5,6), according to claim 2, characterised in that the inclination brings the geometric centre of the parts that generate the thermic energy during the functioning of the machine, closer to the external parts of the electric rotary machine, so facilitating the thermic dissipation.

7. Electric rotary machine with pairs of cores (5,6) according to claim 1, characterised in that more pairs of cores on the same rotational axis are provided, in particular two pairs of stators and rotors in a symmetrical arrangement with respect to a geometrical plane which is perpendicular to the rotational axis.

8. Method for the production of a core (5,6), apt for use in an electric rotary machine, comprising a stator element and a rotor element that rotates with respect a rotation axis, said elements being separated by an air gap (11), said cores (5,6) being both obtainable from a ferromagnetic tape (13,23), presenting a series of slots and teeth, and wound according to a spiral procedure, and at least a part (10) of every tooth being bent respect the rotational axis, characterised in that the teeth are bent at an angle minor than 90° with respect the rotation axis, the beginning of the inclined part (10) is progressively deplaced as the spiral of the core gradually increases and the end part of each tooth is aligned with the end part of the successive tooth, so that the resulting air gap surface is substantially smooth and of a truncated cone shape.

9. Method for the production of a core (5,6), according to claim 8, characterised in that the spiral winding is realised with a axial displacement of each layer of tape.

10. Method for the production of a core (5,6), according to claim 9, characterised in that the section of the core obtained by winding is of rhomboidal form (fig. 14).

11. Method for the production of a core (5,6), according to claim 10, characterised in that the two sides (17,18) of said rhomboidal section are parallel between themselves and are parallel to the winding axis of the tape, while the other two sides (19,20) of the rhomboidal section are parallel between themselves and inclined respect the winding axis of the tape.

12. Method for the production of a core (5,6), according to claim 10, characterised in that said the bent part of the tooth is realised after the winding of the ferromagnetic tape (13,23).

13. Method for the production of a core (5,6), according to claim 13, characterised in that after the bending of the teeth an inclined side of the rhomboidal section takes on a different inclination and the section is no longer rhomboidal.

14. Method for the production of a core (5,6), according to claim 10, characterised in that the bent part of the tooth is realised before the winding of the tape.

15. Method for the production of a core (5,6), according to claim 10, characterised in that the bent part of the tooth is realised simultaneously with the winding of the tape (13,23).

16. Electric rotary machine, comprising a stator element and a rotor element that rotates with respect to a rotation axis, said elements each comprising a core (5,6), said elements being separated by an air gap (11), and one of said cores (5,6) being realised from one or more permanent magnets, the other one of said cores (5,6) being obtained according to the method of claim 8.

## Patentansprüche

1. Kernpaar (5,6), das für den Gebrauch in einer rotierenden elektrischen Maschine geeignet ist, die ein Statorelement und ein gegenüber einer Drehachse drehendes Rotorelement umfaßt, die obengenannten Elemente sind durch einen Luftspalt (11) getrennt, wenigstens ein der obengenannten Kerne ist aus einem ferromagnetischen Band (13,23) zu erhalten, das eine Reihe von Nuten und Zähnen zeigt und einem spiraligen Verfahren gemäß aufgewickelt ist, wobei wenigstens ein Teil (10) jeden Zahnes gegenüber der Drehachse gekrümmt ist, dadurch gekennzeichnet, daß die Zähne mit einem kleineren als 90° Neigungswinkel nach außen gegenüber der Drehachse gekrümmt sind, und daß die resultierende Luftspaltfläche kegelstumpfförmig ist.

2. Kernpaar (5,6) nach Anspruch 1, dadurch gekennzeichnet, daß der Ursprung des schrägen Teils (10) eines Zahnes nach und nach verschoben wird in dem Maße, wie sich die Kernspirale graduell ausdehnt, wobei der Endteil jedes Zahnes sich mit dem Endteil des nächstfolgenden Zahnes so anreiht, daß man eine bedeutend glatte Luftspaltfläche erhält.

3. Kernpaar (5,6) nach Anspruch 1 oder 2, dadurch gekennzeichnet, daß in einem der Kerne der Ursprung des schrägen Teils nach und nach auf das Zahnende verschoben wird in dem Maße, wie sich die Kernspirale graduell ausdehnt, während in dem anderen Kern die Krümmungsrichtung der des ersten Kernes entgegengesetzt ist, und der Ursprung des schrägen Teils nach innen des Zahnes verschoben wird in dem Maße, wie sich die Kernspirale graduell ausdehnt.

4. Kernpaar (5,6) nach Anspruch 1, dadurch gekennzeichnet, daß der obengenannte gekrümmte Teil mehr als eine Zahnneigung gegenüber der Drehachse schafft.

5. Kernpaar (5,6) nach Anspruch 1, dadurch gekennzeichnet, daß der obengenannte gekrümmte Teil dem Bogen einer Kurve gemäß hergestellt wird.

6. Kernpaar (5,6) nach Anspruch 2, dadurch gekennzeichnet, daß die Neigung das geometrische Mittelpunkt der während des Betriebs der Maschine Wärmeenergie erzeugenden Teile den Außenteilen der rotierenden elektrischen Maschine so näher bringt, daß die thermische Dissipation erleichtert wird.

7. Rotierende elektrische Maschine mit Kernpaar (5,6) nach Anspruch 1, dadurch gekennzeichnet, daß mehrere Kernpaare auf derselben Drehachse vorgesehen sind, insbesondere zwei Stator- und Rotorpaare symmetrisch gegenüber einer Geometrischeebene, die senkrecht zu der Drehachse ist.

8. Verfahren zur Herstellung eines für den Gebrauch in einer rotierenden elektrischen Maschine geeigneten Kernes (5,6), die ein Statorelement und ein gegenüber einer Drehachse drehendes Rotorelement umfaßt, die obengenannten Elemente sind durch einen Luftspalt getrennt, die beiden obengenannten Kerne sind aus einem ferromagnetischen Band zu erhalten, das eine Reihe von Nuten und Zähnen zeigt und einem spiraligen Verfahren gemäß aufgewickelt ist, wobei wenigstens ein Teil (10) jedes Zahnes gegenüber der Drehachse gekrümmt ist, dadurch gekennzeichnet, daß die Zähne mit einem kleineren als 90° Neigungswinkel gegenüber der Drehachse gekrümmt sind, daß der Ursprung des schrägen Teils nach und nach verschoben wird in dem Maße, wie sich die Kernspirale graduell ausdehnt, daß der Endteil jedes Zahnes sich mit dem Endteil des nächstfolgenden Zahnes so anreiht, daß man eine kegelstumpfartige, bedeutend glatte Luftspaltfläche erhält.

9. Verfahren zur Herstellung eines Kernes (5,6) nach Anspruch 8, dadurch gekennzeichnet, daß die spiralförmige Wicklung mit einer Axialverschiebung jeder Bandschicht hergestellt wird.

10. Verfahren zur Herstellung eines Kernes (5,6) nach Anspruch 9, dadurch gekennzeichnet, daß der durch Wicklung hergestellte Kernquerschnitt rautenförmig ist.

11. Verfahren zur Herstellung eines Kernes (5,6) nach Anspruch 10, dadurch gekennzeichnet, daß die zwei Seiten (17,18) des obengenannten rautenförmigen Querschnittes zu sich und zur Bandwicklungachse parallel sind, wobei die zwei anderen Seiten (19,20) des rautenförmigen Querschnittes zu sich parallel und gegenüber der Wicklungachse des Bandes schief sind.

12. Verfahren zur Herstellung eines Kernes (5,6) nach Anspruch 10, dadurch gekennzeichnet, daß der obengenannte schräge Zahnteil nach der Wicklung des ferromagnetischen Bandes hergestellt wird.

13. Verfahren zur Herstellung eines Kernes (5,6) nach Anspruch 3, dadurch gekennzeichnet, daß eine schräge Seite des rautenförmigen Querschnittes nach der Zahnkrümmung eine solche verschiedene Neigung annimmt, daß der Querschnitt nicht mehr rautenförmig ist.

14. Verfahren zur Herstellung eines Kernes (5,6) nach Anspruch 10, dadurch gekennzeichnet, daß der schräge Zahnteil vor der Bandwicklung hergestellt wird.

15. Verfahren zur Herstellung eines Kemes (5,6) nach Anspruch 10, dadurch gekennzeichnet, daß der schräge Zahnteil zur gleichen Zeit als die Bandwicklung hergerstellt wird.

16. Rotierende elektrische Maschine, die ein Statorelement und gegenüber einer Drehachse drehendes Rotorelement umfaßt, jedes obengenannte Element umfaßt ein Kern, die obengenannten Elemente sind durch einen Luftspalt getrennt, und ein der obengenannten Kerne wird aus einem oder mehreren Permanentmagneten hergestellt, wobei das andere der obengenannten Kerne nach dem Verfahren des Anspruchs 8 zu erhalten ist.

## Revendications

1. Couple de noyaux (5,6) apte à l'usage dans une machine électrique tournante, comprenant un élément stator et un élément rotor tournant par rapport à un axe de rotation, lesdits éléments étant séparés par un entrefer (11), au moins un desdits noyaux étant réalisable d'un ruban ferromagnétique (13,23), présentant une série de rainures et dents, et enroulé selon une procédure en spirale, et au moins une partie (10) de chaque dent étant courbée par rapport à l'axe de rotation, caracterisé en ce que les dents sont courbées d'un angle inférieur à 90° vers l'extérieur par rapport à l'axe de rotation et ayant pour résultat une surface d'entrefer de forme tronconique.

2. Couple de noyaux (5,6) selon la revendication 1, caracterisé en ce que le début de la partie inclinée (10) de la dent est progressivement déplacé au fur et à mesure que la spirale du noyau s'agrandit progressivement et la partie finale de chaque dent est alignée avec la partie finale de la dent successive et une surface d'entrefer considérablement lisse est obtenue.

3. Couple de noyaux (5,6) selon la revendication 1 ou 2, caracterisé en ce que dans l'un des noyaux le début de la partie inclinée (10) est progressivement déplacé vers la fin de la dent au fur et à mesure que la spirale du noyau s'agrandit progressivement, alors que dans l'autre noyau la direction de la courbure est opposée à celle du premier noyau et le début de la partie inclinée est progressivement déplacé vers l'intérieur de la dent au fur et à mesure que la spirale du noyau s'agrandit progressivement.

4. Couple de noyaux (5,6) selon la revendication 1, caracterisé en ce que la partie courbée (10) crée plus d'une inclination de la dent comparée à l'axe de rotation.

5. Couple de noyaux (5,6) selon la revendication 1, caracterisé en ce que ladite partie courbée (10) est réalisée selon l'arc d'une courbe.

6. Couple de noyaux (5,6) selon la revendication 2, caracterisé en ce que l'inclination approche le centre géometrique des parties qui engendrent l'énergie thermique pendant le fonctionnement de la machine aux parties extérieures de la machine électrique tournante, facilitant ainsi la dissipation thermique.

7. Machine électrique tournante avec des couples de noyaux (5,6) selon la revendication 1, caracterisé en ce que plusieurs couples de noyaux sur le même axe de rotation sont prévus, et notamment deux couples de stators et rotors rangés symétriquement par rapport à un plan géometrique qui est perpendiculaire à l'axe de rotation.

8. Méthode pour la production d'un noyau apte à l'usage dans une machine électrique tournante, comprenant un élément stator et un élément rotor tournant par rapport à un axe de rotation, lesdits éléments étant séparés par un entrefer (11), lesdits noyaux (5,6) étant les deux réalisables d'un ruban ferromagnétique (13,23), présentant une série de rainures et dents, et enroulés selon une procédure en spirale, et au moins une partie (10) de chaque dent étant courbée par rapport à l'axe de rotation, caracterisé en ce que les dents sont courbées d'un angle inférieur à 90° par rapport à l'axe de rotation, le début de la partie (10) inclinée est progressivement déplacé au fur et à mesure que la spirale du noyau s'agrandit progressivement et la partie finale de chaque dent est alignée avec la partie finale de la dent successive, de telle manière que la surface d'entrefer se révèle considérablement lisse et tronconique.

9. Méthode pour la production d'un noyau (5,6) selon la revendication 8, caracterisé en ce que l'enroulement en spirale est réalisé par un déplacement axial de chaque couche du ruban.

10. Méthode pour la production d'un noyau (5,6) selon la revendication 9, caracterisé en ce que la section du noyau obtenue par enroulement est de forme rhomboïdale.

11. Méthode pour la production d'un noyau (5,6) selon la revendication 10, caracterisé en ce que les deux côtés (17,18) de ladite section rhomboïdale sont parallèles entre eux et sont parallèles à l'axe d'enroulement du ruban, alors que les deux autres côtés (19,20) de la section rhomboïdale sont parallèles entre eux et inclinés par rapport à l'axe d'enroulement du ruban.

12. Méthode pour la production d'un noyau (5,6) selon la revendication 10, caracterisé en ce que la partie inclinée de la dent est réalisée après l'enroulement du ruban ferromagnétique (13,23).

13. Méthode pour la production d'un noyau (5,6) selon la revendication 13, caracterisé en ce que après l'inclination des dents un côté incliné de la section rhomboïdale prend une inclination différente et la section n'est plus rhomboïdale.

14. Méthode pour la production d'un noyau (5,6) selon la revendication 10, caracterisé en ce que la partie inclinée de la dent est réalisée avant l'enroulement du ruban.

15. Méthode pour la production d'un noyau (5,6) selon la revendication 10, caracterisé en ce que la partie inclinée de la dent est réalisée en même temps que l'enroulement du ruban (13,23).

16. Machine électrique tournante, comprenant un élément stator et un élément rotor, tournant par rapport à un axe de rotation, lesdits éléments comprenant chacun un noyau (5,6), lesdits éléments étant séparés par un entrefer (11), et l'un desdits noyaux (5,6) étant réalisé d'un ou plusieurs aimants permanents, l'autre desdits noyaux (5,6) étant obtenu selon la méthode de la revendication 8.
